# EUROPEAN PATENT SPECIFICATION

(11) **EP 1 080 959 B1**
(45) Date of publication and mention of the grant of the patent: **24.11.2004**
(21) Application number: 00115390.7
(22) Date of filing: 02.09.2000
(51) Int. Cl.: B60H 1/34

(54) **Ventilation louver, in particular for motor vehicles**
Lüftungsgitter, insbesondere für Kraftfahrzeuge
Grille de ventilation, en particulier pour véhicules automobiles

(30) Priority: 03.09.1999 IT PN990032 U
(43) Date of publication of application: 07.03.2001
(73) Proprietor: Plastal S.p.A., 33170 Pordenone (IT)
(72) Inventor: Scapol, Luca, 33080 Roveredo in Piano, Pordenone (IT); Tonel, Ivo, 33170 Pordenone (IT); Zaffalon, Oliviero, 31030 Pero, Treviso (IT)
(74) Representative: Giugni, Valter

(56) References cited:
- WO-A-98/29272
- DE-C- 3 719 837
- US-A- 4 796 518
- US-A- 5 338 252

## Description

The present invention refers to an improved ventilation louver, in particular adapted for use in motor vehicles.

Ventilation louvers of the above cited kind are largely known to be normally made of rigid plastic material or metal (preferably finished by painting) and mainly comprise a peripheral frame that delimitates an end portion of at least a conduit for the passage of air into the interior of the vehicle. Such a frame is arranged in an either fixed or adjustable manner in the passenger compartment of the vehicle and is associated to at least an array of first slat-like baffle plates provided in a mutually parallel arrangement and capable of being orientated, for adjusting the direction of the air flow, into a pre-determined (usually transverse) direction.

In particular, these first baffle or flow-diverting slats are hinged on in a swivelling manner within said frame and are appropriately connected to each other in such a manner as to be capable of being orientated, ie. adjusted, at the same time and in a similar manner about the respective hinge-on axes of rotation thereof upon the actuation of a control slider, or the like, that is connected thereto through a hinged-on lever.

The slider is mounted so as to be capable of sliding longitudinally on at least a further slat that acts as a guide and may be mounted on the frame, in either a fixed or an adjustable manner, in a direction that is substantially perpendicular with respect to said first baffle or flow-directing slats. The combined orientation of all slats (or of the frame and the first baffle or flow-directing slats) determines the direction of the air flow towards the interior of the passenger compartment of the vehicle.

The slider can be mounted on said guide slat in a variety of manners: for instance, it may be formed by two complementary parts adapted to get into mutual engagement so as to close in around the guide slat; as an alternative thereto, the slider may be provided with a through-aperture by means of which it is then capable of being inserted laterally on the guide slat, or it may have a cross-section in the shape of substantially a C so as to be able to be snap-fitted frontally on to the guide slat with an elastic snap-over movement.

In any case, owing to the need for the sliding or actuation force of the slider to be kept within pre-determined tolerance limits, the dimensions of the various component parts are such that the assembly and/or the actuation of the slider can disadvantageously damage or affect the surface finishing of the guide slat, especially when the latter (or the entire louver assembly) is painted. The need in fact arises for a precise dimensional correspondence to be ensured between the guide slat and the slider, which therefore feature in all cases some points of direct contact. As a result, the assembly and/or the actuation of the slider can cause undesired scratches to be produced on the guide slat, as this has been stressed above.

It should further be noticed that, for the same reasons, none of the afore mentioned traditional methods used to assemble the slider actually allows for the louver to be finished by painting it (as this would on the contrary turn out to be definitely more practical and cost-effective) before the assembly of the same slider.

In addition, in order to allow for a smooth sliding of the slider with respect to the guide slat, as well as to reduce the contact points between the two component parts, the latter are connected to each other under the interposition of an elastic member adapted to keep the slider normally spaced from the front surface of the guide slat. In particular, this elastic member usually comprises a metal leaf spring hooked on in a receptacle provided frontally in the guide slat. Now, such a leaf spring obviously constitutes an additional component part contributing undesirably to a further complication in both the construction and the assembly of the entire ventilation louver.

Document WO 9 829 272 discloses a ventilation lower according to the preamble of claim 1.

It therefore is a main purpose of the present invention to provide a ventilation louver, in particular for use in motor vehicles, which is particularly simple to manufacture and assemble, as well as substantially free of any surface deterioration problem during normal assembly and/or use thereof.

A further purpose of the present invention is to provide a ventilation louver of the above cited kind, which is capable of being adjusted in an easy, convenient and smooth manner during use.

According to the present invention, these aims are reached in a ventilation louver , in particular for motor vehicles, embodying the characteristics as recited in the appended claims.

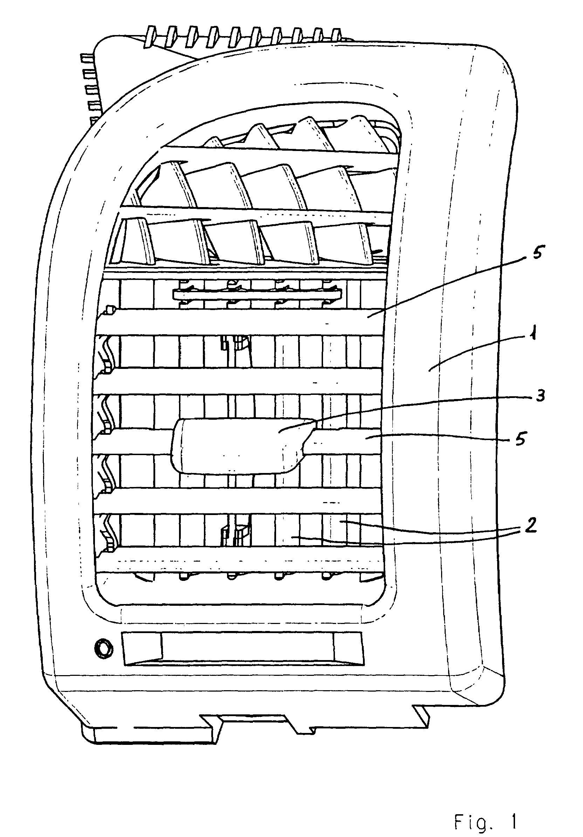

The features and advantages of the present invention will anyway be more readily and clearly understood from the description that is given below by way of non-limiting example with reference to the accompanying drawings, in which
- Figure 1 is a front perspective view of an embodiment of the ventilation louver according to the present invention;
- Figure 2 is a plan enlarged-scale view of a detail of the ventilation louver shown in Figure 1;

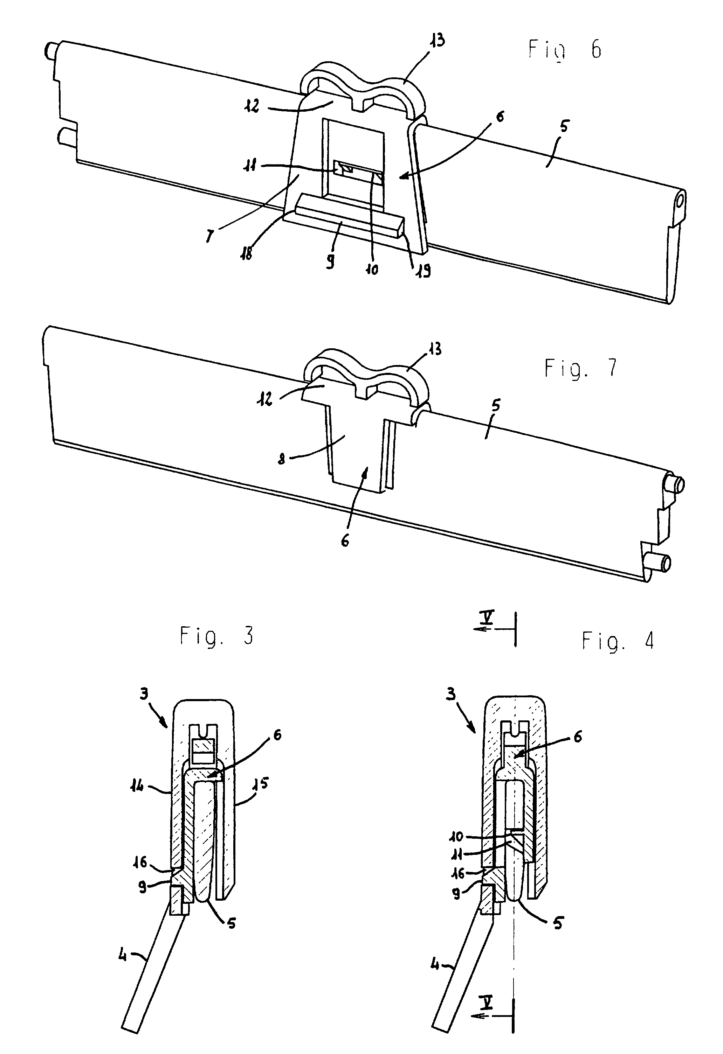

- Figures 3 and 4 are enlarged-scale views of the sections III-III and IV-IV of Figure 2, respectively;
- Figure 5 is a view of the section V-V of Figure 4; and
- Figures 6 and 7 are respective opposite perspective views of the guide slat of Figure 2, in which the adjustment slider has been removed.

With reference to the Figures, the ventilation louver is made out of a rigid material, such as for instance plastics and/or metal, and mainly comprises e peripheral frame 1 that delimitates the end portion of at least a conduit for the passage of air, in particular into the interior of a motor vehicle. In a per se known manner, the frame 1 is adapted to be mounted in an either fixed or adjustable manner in the passenger compartment of the vehicle and the louver is preferably provided with means (not shown for reasons of greater simplicity) adapted to adjust the flow rate of the air.

The direction of the air flow is adjustable by means of at least a series of first baffle or flow-directing slats 2 that are arranged parallel to each other, connected to each other and hinged on in such a manner as to be able to be orientated at the same time by means of at least a slider 3, the latter being connected in a hinged-on manner to at least one of the slats 2 through a lever 4.

The slider 3 is mounted so as to be able to slide longitudinally for a certain length with respect to at least a further support slat 5 mounted on the frame 1, in an either fixed or orientatable manner, in a direction that is substantially perpendicular with respect to the first flow-directing slats 2.

In a preferred manner, there is provided a plurality of slats 5 in a mutually parallel arrangement. The combined orientation of the slats 2, 5 (or of the frame 1 and the first baffle or flow-directing slats 2) determines the direction of the air flow towards the interior of the passenger compartment of the vehicle.

According to a feature of the present invention, the slider 3 is mounted on the support slat 5 under interposition of a spacer member 6 which is fastened to said slat 5 and acts at the same time both as a mechanical snap-on fitting member and a sliding guide for the slider 3.

The slider 3 and the spacer member 6 have a cross-section in the shape of substantially a C. In particular, the spacer member 6 is adapted to be snap-fitted frontally on to the support slat 5 with a smooth elastic apart-opening and snap-over movement of two opposite faces 7, 8 thereof.

The face 7 is shaped so as to feature at least a guide rib 8 protruding outwardly and extending preferably parallel to the support slat 5.

The face 8 is shaped so as to feature at least a retaining tooth 10 protruding inwardly and adapted to engage a corresponding aperture 11 provided in the slat 5.

The spacer member 6 is preferably made of a material having a low coefficient of friction and a high elasticity, such as for instance an acetal resin, so that the insertion thereof into position on the support slat 5 does not cause the surface of the same slat to suffer any scratching or similar damage whatsoever, not even in the case in which such a slat is pre-painted or if the insertion is carried out sidewise, in a longitudinal direction.

The spacer member 6 also comprises, in correspondence of the central portion 12 thereof, at least a leaf spring 13 (or similar elastic pushing means) that is preferably provided integral therewith and is adapted to perform in the traditional function of transversally spacing the slider 3 with respect to the front surface of the slat 5, as well as allowing for a smooth longitudinal sliding movement of the slider 3 when the latter is actuated manually on the front side in order to orientate the flow-directing slats 2.

The slider 3 in turn comprises two opposite faces 14, 15, on at least one of which there is provided a slot 16 or the like. The slider 3 is snap-fitted frontally and elastically on to the spacer member 6, to which it then is substantially joined in a transverse direction owing to the slot 16, in which the rib 9 of the spacer member 6 gets inserted. It will of course be appreciated that the coupling members 9 and 16 may be provided on the slider 3 and the spacer member 6, respectively, in an opposite arrangement with respect to the above described solution. In any case, the although limited thickness of the faces 7 and 8 of the spacer member 6, along with the spring 13 are capable of always keeping the slider 3 substantially spaced apart from the support slat 5, with which the slider itself has therefore no point of contact. In an advantageous manner, therefore, the slider 3 will not cause the slat 5 to suffer any scratch or similar damage and will slide smoothly with respect to the spacer member 6.

The slot 16 is substantially corresponding to the rib 9, but has a greater longitudinal length, so as to enable the slider 3 to slide with respect to the support slat 5 for a longitudinal distance that is defined by respective abutments of the slot 16 against the opposite ends 18, 19 of the rib 9.

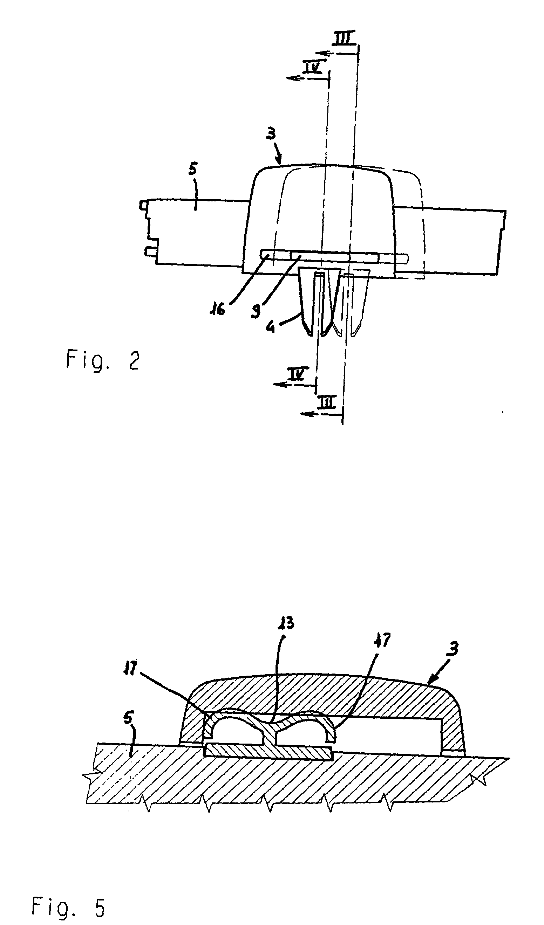

In Figure 2, the slider 3 is illustrated with a continuous line in an intermediate position, and with a dashed line in one of its two possible side end-of-stroke or full-scale positions. As this has already been pointed out, the longitudinal position of the slider 3 with respect to the support slat 5 determines the angular orientation of the flow-directing slats 2.

In a preferred manner, furthermore, the various parts and members involved are so sized as to ensure that the opposite ends 17 of the leaf spring 13 (Figure 5) come into contact with the slider 3 just before the latter reaches the respective side abutments, thereby acting practically as respective dampers that make the actuation of the same slider still smoother and agreeable.

Noteworthy is the manufacturing and assembling simplicity of the assembly 3, 5, 6, which is actually constituted by just a limited number of component parts that are easily assembled together by means of a double snap-fitting action to mount the spacer member 6 on the slat 5 and the slider 3 on the same spacer member 6.

A further important advantage emerging over prior-art solutions lies in the fact that such an assembly of the component parts 3 and 6 on the support slat 5 can be easily carried out frontally (without causing the slat 5 to suffer any scratch, as this has already been pointed out) after that the remaining part of the louver has already been assembled and possibly also painted.

It will of course be appreciated that the above described ventilation louver may be the subject of a number of further modifications or variants without departing from the scope of the appended claims.

## Claims

1. Ventilation louver, in particular for motor vehicles, comprising a frame to which there are hinged on a plurality of first substantially parallel flow-diverting slats adapted to be orientated by means of a slider capable of sliding longitudinally with respect to at least a further support slat that is substantially perpendicular with respect to said first flow-diverting slats, **characterized in that** said slider (3) is mounted on said support slat (5) under interposition of at least a spacer member (6) that is fixed to said support slat and acts at the same time as a mechanical snap-on fitting member and a sliding guide for the slider (3).

2. Ventilation louver according to claim 1, **characterized in that** said spacer member (6) is snap-fitted transversally on to the support slat (5) and the slider (3) is in turn snap-fitted transversally on to said spacer member.

3. Ventilation louver according to claim 2, **characterized in that** said spacer member (6) and said slider (3) have a cross-section in the shape of substantially a C.

4. Ventilation louver according to claim 1, **characterized in that** said slider (3) comprises a slot (16) that is adapted to be engaged by at least a rib (9) of said spacer member (6) and acting as a longitudinal sliding guide and a substantial retaining means in the transverse direction.

5. Ventilation louver according to claim 1, **characterized in that** said spacer member (6) is made of a material having a low coefficient of friction and a high elasticity, such as an acetal resin.

6. Ventilation louver according to claim 1, **characterized in that** said spacer member (6) also comprises, in correspondence of a central portion (12) thereof, elastic pushing means (13) adapted to keep the slider (3) normally spaced apart from the front surface of the support slat (5).

7. Ventilation louver according to claim 6, **characterized in that** said elastic means (13) are provided integrally on the spacer member (6).

8. Ventilation louver according to claim 6, **characterized in that** said elastic means (13) comprise respective opposite end portions (17) acting as damping means for respective side abutments of said slider (3).

## Patentansprüche

1. Ventilationslüftungsöffnung, insbesondere für Kraftfahrzeuge, umfassend einen Rahmen, an welchem eine Vielzahl von ersten im Wesentlichen parallelen Luftstromumleitenden-Lamellen um Scharniere schwenkbar sind, die angepasst sind, um durch Mittel eines Gleiters orientiert zu werden, der fähig ist, longitudinal in Bezug auf eine weitere Trägerlamelle zu gleiten, die im Wesentlichen rechtwinklig in Bezug auf die ersten Luftstrom-umleitenden Lamellen angeordnet ist, **dadurch gekennzeichnet, dass** der Gleiter (3) auf der Trägerlamelle (5) unter Zwischenschaltung von zumindest einem Abstandshalteglied (6) montiert ist, das an der Trägerlamelle befestigt ist und gleichzeitig wie ein mechanisches einrastendes Montageglied und eine gleitende Führung für den Gleiter (3) wirkt.

2. Ventilationslüftungsöffnung nach Anspruch 1, **dadurch gekennzeichnet, dass** das Abstandshalteglied (6) mittels transversalen Rasthacken auf der Trägerlamelle (5) befestigt ist und der Gleiter (3) wiederum mittels transversalen Rasthacken auf dem Abstandshalteglied befestigt ist.

3. Ventilationslüftungsöffnung nach Anspruch 2, **dadurch gekennzeichnet, dass** das Abstandshalteglied (6) und der Gleiter (3) einen Querschnitt in der Form von im Wesentlichen einem C aufweisen.

4. Ventilationslüftungsöffnung nach Anspruch 1, **dadurch gekennzeichnet, dass** der Gleiter einen Schlitz (16) umfasst, der angepasst ist, um mittels zumindest einer Rippe (9) des Abstandshalteglieds (6) in Eingriff gebracht zu werden und als eine longitudinale gleitende Führung sowie als ein wesentliches Haltemittel in der transversalen Richtung wirkt.

5. Ventilationslüftungsöffnung nach Anspruch 1, **dadurch gekennzeichnet, dass** das Abstandshalteglied (6) aus einem Werkstoff hergestellt ist, das einen niedrigen Reibungskoeffizienten und eine hohe Elastizität aufweist, so wie beispielsweise ein Acetalharz.

6. Ventilationslüftungsöffnung nach Anspruch 1, **dadurch gekennzeichnet, dass** das Abstandshalteglied (6), korrespondierend zu einem Zentralabschnitt (12) davon, elastische Druckmittel (13) auch umfasst, die angepasst sind, um den Gleiter (3) von der Frontfläche der Trägerlamelle (5) normal beabstandet getrennt zu halten.

7. Ventilationslüftungsöffnung nach Anspruch 1, **dadurch gekennzeichnet, dass** die elastischen Mittel (13) integral auf dem Abstandshalteglied (6) bereitgestellt sind.

8. Ventilationslüftungsöffnung nach Anspruch 1, **dadurch gekennzeichnet, dass** die elastischen Mittel (13) jeweilige gegenüberliegende Endabschnitte (17) umfassen, die als dämpfende Mittel für die jeweiligen Seitenwiderlager des Gleiters (3) wirken.

## Revendications

1. Grille de ventilation, en particulier pour véhicules automobiles, comportant un châssis sur lequel sont articulées une pluralité de premières lames de déviation d'écoulement sensiblement parallèle adaptées pour être orientées par l'intermédiaire d'un coulisseau capable de coulisser longitudinalement par rapport à au moins une lame de support supplémentaire qui est sensiblement perpendiculaire par rapport auxdites premières lames de déviation d'écoulement, **caractérisée en ce que** ledit coulisseau (3) est monté sur ladite lame de support (5) avec interposition d'au moins un élément d'espacement (6) qui est fixé sur ladite lame de support et qui agit en même temps en tant qu'élément d'agencement par encliquetage mécanique et guide de coulissement pour le coulisseau (3).

2. Grille de ventilation selon la revendication 1, **caractérisée en ce que** ledit élément d'espacement (6) est agencé par encliquetage transversalement sur la lame de support (5), et **en ce que** le coulisseau (3) est à son tour agencé par encliquetage transversalement sur ledit élément d'écartement.

3. Grille de ventilation selon la revendication 2, **caractérisée en ce que** ledit élément d'espacement (6) et ledit coulisseau (3) a une coupe transversale sensiblement en forme de C.

4. Grille de ventilation selon la revendication 1, **caractérisée en ce que** ledit coulisseau (3) comporte une fente (16) qui est adaptée pour être mise en prise par au moins une nervure (9) dudit élément d'espacement (6), et agissant en tant que guide de coulissement longitudinal et moyens de retenue importante dans la direction transversale.

5. Grille de ventilation selon la revendication 1, **caractérisée en ce que** ledit élément d'espacement (6) est fabriqué en un matériau ayant un faible coefficient de frottement et une élasticité élevée, tel qu'une résine acétal.

6. Grille de ventilation selon la revendication 1, **caractérisée en ce que** ledit élément d'espacement (6) comporte également, en correspondance avec une partie centrale (12) de celui-ci, des moyens de poussée élastiques (13) adaptés pour garder le coulisseau (3) normalement espacé de la surface avant de la lame de support (5).

7. Grille de ventilation selon la revendication 6, **caractérisée en ce que** lesdits moyens élastiques (13) sont agencés en un seul bloc sur l'élément d'espacement (6).

8. Grille de ventilation selon la revendication 6, **caractérisée en ce que** lesdits moyens élastiques (13) comportent des parties d'extrémité opposées respectives (17) agissant en tant que moyens d'amortissement pour des butées latérales respectives dudit coulisseau (3).
